# EUROPÄISCHE PATENTSCHRIFT

(11) **EP 0 552 441 B1**
(45) Veröffentlichungstag und Bekanntmachung des Hinweises auf die Patenterteilung: **17.01.1996**
(21) Anmeldenummer: 92120262.8
(22) Anmeldetag: 27.11.1992
(51) Int. Cl.: H01M 10/34, H01M 2/16

(54) **Gasdicht verschlossener alkalischer Akkumulator in Knopfzellenform**
Gastight sealed alkaline accumulator of the button-cell type
Accumulateur alcalin étanche du type bouton

(30) Priorität: 18.01.1992 DE 4201243
(43) Veröffentlichungstag der Anmeldung: 28.07.1993
(73) Patentinhaber: VARTA Batterie Aktiengesellschaft, D-30405 Hannover (DE)
(72) Erfinder: Grabinski, Michael, Dr., W-3201 Diekholzen 1 (DE); Kleinsorgen, Klaus, W-6233 Kelkheim (DE); Köhler, Uwe, Dr., W-6233 Kelkheim (DE)
(74) Vertreter: Kaiser, Dieter Ralf, Dipl.-Ing.

(56) Entgegenhaltungen:
- EP-A- 0 174 526
- EP-A- 0 218 028

## Beschreibung

Die Erfindung betrifft einen gasdicht verschlossenen alkalischen Akkumulator in Knofzellenform mit einer porösen positiven Elektrode, einer porösen negativen Elektrode, einer den Sauerstoffverzehr unterhaltenden, in elektrischleitendem Kontakt zur negativen Elektrode stehenden Hilfselekrode und einem zwischen den Hauptelektroden angeordneten Separator, wobei im wesentlichen kein freier Elektrolyt vorhanden ist.

Das Anwendungsgebiet der Erfindung erstreckt sich vornehmlich auf Knopfzellen des Ni/Cd-Typs und Ni/Hydrid-Typs, schließt aber auch andere wiederaufladbare alkalische Systeme wie Ni/Zn oder AgO/Zn mit ein.

Eine sehr häufige Ursache für den vorzeitigen Ausfall wiederaufladbarer alkalischer Knopfzellen ist die Austrocknung des Separators, durch welche der lonenleitpfad zwischen den Elektroden unterbrochen wird. Für den Elektrolytverlust des Separators, wie er nach anhaltendem zyklischen Lade-/ Entladebetrieb oder Dauerüberladung beobachtet wird, gibt es zwei Gründe: der eine ist die Quellung der am Separator beiderseits anliegenden Elektroden, der andere ist eine Elektrolytverarmung, hervorgerufen durch eine wasserverbrauchende innere Korrosion.

Die Quellung positiver Nickelhydroxidelektroden, die ihre Ursache in kristallchemischen Phasenumwandlungen während der elektrischen Zyklenbehandlung hat, wodurch Nickelhydroxidphasen mit größerem Volumenbedarf entstehen, ist allgemein bekannt.

Mit der Elektrodenquellung geht auch eine Vergrößerung des inneren Porenvolumens der Elektroden einher. Zu Beginn des Zyklenlebens sind normalerweise die Porenvolumina beider Elektroden zu 100% gefüllt. Der Separator weist dabei einen Füllgrad von 70 bis 90% auf. Da die Porendurchmesser in den Elektroden mit 5µm bis 50µm deutlich unter denen eines üblichen Separators mit 100µm bis 300µm liegen und die Fasern, aus denen dieser gebildet wird, überdies vorwiegend hydrophobe Eigenschaften aufweisen, wirkt sich eine Quellung der Elektroden vornehmlich in Richtung auf eine Verarmung des Elektrolytgehaltes im Separator aus. Die Kapillarkonkurrenz kann auf diese Weise zu einem völligen Austrocknen des Separators führen. Dies macht sich zuerst in einem Anstieg des Innenwiderstands der Zelle und damit einhergehend sinkender Belastbarkeit und erniedrigter Spannungslage bemerkbar.

Zu dem Austrocknungseffekt der Quellung kommt die schon erwähnte Austrocknung durch Elektrolytverarmung infolge innerer Korrosion hinzu. Diese findet statt an korrodierbaren Substanzen wie z.B. metallischem Nickel, welches zwecks Verbesserung der elektrischen Leitfähigkeit dem aktiven Material der positiven Elektrode in Pulverform beigemischt ist.

Besonders korrosionsanfällig wegen ihrer leicht oxidierbaren Legierungskomponenten, insbesondere derjenigen aus der Gruppe der seltenen Erden, sind Wasserstoffspeicherlegierungen, die in Nickel/Hydrid-Zellen als negative Elektroden eingesetzt werden.

Aufgrund der Reaktion

Meₓ + yH₂O → MeₓO_{y} + yH₂

entziehen sie dem Elektrolyten Wasser. Neben der Oxidation des Metalls kommt es zu einer allmählichen mechanischen Aufsplittung des Legierungsgefüges durch Ein-und Ausbau des Wasserstoffs, bei welcher die Porosität vor allem im Mikrobereich wächst. Auch diese Mikroporen tragen dazu bei, daß die vergleichsweise viel gröberen Poren des Separators mit der Zeit leergesaugt werden. Der Elektrolyt wird zu Lasten des Separators "umverteilt".

Aus der DE-PS 2838857 ist ein Akkumulator vom Ni/H₂-Typ mit einer Mehrzahl von positiven und negativen Elektroden in Stapelanordnung bekannt, an der zwei unterschiedliche Arten von Separatoren beteiligt sind, von denen die eine Art eine sehr geringe Gaspermeabilität bzw. hohe Elektrolytaffinität aufweist und so als Isolierung zwischen positiver und negativer Elektrode eine Kontaminierung gerade der empfindlichen Metallhydridelektrode mit dem an der positiven Elektrode erzeugten Sauerstoffgas verhindert, während die andere Art von Separatoren, ein grobporiges Vliesmaterial, dem Sauerstoff einen Abzug in die entgegengesetzte Richtung zu einer ebenfalls in den Stapel zwischen jeweils zwei positiven Elektroden eingefügten Sauerstoffreduktionselektrode ermöglicht.

Bei dem Metalloxid/Wasserstoff-Akkumulator gemäß DE-OS 3929306 ist zum Schutz der negativen Elektrode eine Umhüllung der Metallhydridpartikel durch ein Metall von geringer Sauerstoffaffinität vorgesehen. Durch Plazierung der auch hier vorhandenen Hilfselektrode für den Sauerstoffverzehr außerhalb des lonenpfades zwischen positiver und negativer Elektrode wird der Sauerstofffluß in der Zelle zusätzlich von der negativen Elektrode abgelenkt. Zur Elektrodenisolierung dient in dieser Zelle ein normaler, einheitlicher Vliesseparator.

Der Erfindung liegt die Aufgabe zugrunde, eine Knopfzelle anzugeben, die eine hohe Lebensdauer besitzt, welche durch Quellung der Elektroden und durch Korrosion der Elektrodenmaterialien wenig beeinträchtigt wird.

Die Aufgabe wird erfindungsgemäß durch einen Akkumulator gelöst, wie er im Patentanspruch 1 definiert ist.

Gemäß einem Teilmerkmal des Anspruchs ist der in dem Knopfzellen-Akkumulator verwendete Separator mikroporös und besitzt aufgrund einer mittleren Porengröße bzw. eines mittleren Porendurchmessers, welcher kleiner ist als die mittleren Porendurchmesser der Elektroden, ein starkes Elektrolytrückhaltevermögen, was sich in einer sehr geringen Gasdurchlässigkeit in der betriebsbereiten, d.h. mit Elektrolyt beschickten Zelle äußert. Diese ergibt sich zwangsläufig aus dem hohen Füllgrad der feinen, kapillaraktiven Poren, der einen Gasdurchtritt nur unter hohen Drucken erlaubt.

Erfindungsgemäß soll der mittlere Porendurchmesser des Separators 0,05µm bis 10µm, vorzugsweise jedoch 0,1µm bis 3µm betragen und seine Dicke bei 0,05mm bis 0,3mm, vorzugweise zwischen 0,1 mm und 0,2mm liegen.

Grundsätzlich kann jedes feinporige Material für den Separator verwendet werden, sofern es laugebeständig ist und den genannten Maßgaben entspricht.

Besonders vorteilhaft ist jedoch eine Kunststoffmembran, vorzugsweise aus Polyethylen (PE) oder Polypropylen (PP). Man erhält eine solche auf mannigfache Weise, z.B. durch Recken eines entsprechenden Folienmaterials. Nach einer anderen Herstellungsmethode wird eine Kunststoffmasse, die mit einem feinpulverigen Porenbildner vermischt ist, zu einer Membran ausgeformt, z.B. durch Extrudieren oder Walzen, und aus dieser dann der Porenbildner herausgelöst. In diesem Fall entfällt eine Reckung.

Geeignet für den erfindungsgemäßen Zweck sind auch strahlenvernetzte Polymerfolien.

Ein solcher Separator weist aufgrund seiner hohen Oberflächenkräfte stets einen sehr hohen Elektrolytfüllgrad von 95 bis 100% auf und ist dadurch sowie wegen seines geringen Porendurchmessers für Sauerstoff, der an der positiven Elektrode während der Überladung entsteht, praktisch unpassierbar. Er bildet somit einen wirksamen Oxidationsschutz für die negative Elektrode, insbesondere für die empfindliche H₂-Speicherlegierung einer Nickel/Hydridzelle, wozu die üblicherweise in alkalischen Zellen eingesetzten Faservlies-Separatoren nicht befähigt sind. Mit Porendurchmessern von etwa 100µm bis 300µm üben diese nur relativ geringe Kapillarkräfte aus, wobei der Füllgrad etwa 50 bis 80% beträgt, so daß der in der Zelle entstehende 0₂-über-ladedruck ausreicht, um die Oberflächenspannung des Laugeelektrolyten (5n bis 8n KOH) zu überwinden.

Der Separator gemäß der Erfindung bleibt also vor der Gefahr des Austrocknens bewahrt.

Der von der positiven Elektrode freigesetzte Sauerstoff muß aber in einem dicht verschlossenen Akkumulator an die negative Elektrode bzw. an eine am gleichen Potential liegende Hilfselektrode gelangen, um dort verzehrt zu werden, was je nach ZellTyp durch folgende Gleichungen beschrieben wird:

Ni/Cd
- chemisch:: Cd + 1/2 O₂ + H₂O → Cd(OH)₂
- elektrochemisch:: 1/2 O₂ + H₂O + 2e- → 2 OH⁻
Ni/H
- chemisch:: 2MeH + 1/2 O₂ → 2Me + H₂O
- elektrochemisch:: 1/2 O₂ + H₂O + 2e- → 2 OH⁻

Erfindungsgemäß wird dies dadurch erreicht, daß die Hilfselektrode außerhalb des lonenleitpfades zwischen positiver und negativer Elektrode, welcher sich gewöhnlich durch den Separator erstreckt, angeordnet ist. Vorteilhaft ist es insbesondere, eine mit der negativen Elektrode kurzgeschlossene Hilfselektrode innerhalb eines Knopfzellengehäuses auf deren frei zugänglicher Rückseite anzuordnen.

Die wiederaufladbare alkalische Knopfzelle gemäß der Erfindung erweist sich dank Einsatzes eines mikroporösen Membran-Separators mit einer bestimmten Porencharakteristik, die ihn vor frühzeitigem Austrocknen bewahrt, als überraschend langlebig im dauernden Zyklenbetrieb. Die gasdichte Funktion der Zelle gewährleistet der reibungslose, direkte Transport des Sauerstoffs von der positiven Elektrode an die Rückseite der negativen Elektrode, wo er mit hoher Kinetik an einer Verzehrelektrode auf elektrochemischem Wege umgesetzt wird.

Als Elektrodenmaterialien für die Zelle stehen im Prinzip alle Elektroden aus bekannten alkalischen Sekundärsystemen zur Wahl, wobei auf der positiven Seite jedoch Nickelhydroxid und Silberoxid bevorzugt sind. Für die negative Seite kommen Cadmium, Zink sowie bei Ni/Hydrid-Akkumulatoren die besonders bevorzugten Wasserstoffspeicherlegierungen vom AB₅-Typ (LaNi₅) oder vom AB₂-Typ (NiTi₂) infrage.

Einige Figuren und ein Ausführungsbeispiel erläutern im folgenden die Erfindung
Figur 1 zeigt einen Knopfzellen-Akkumulator gemäß der Erfindung im Schnitt
Figur 2 zeigt das Kapazitätsverhalten über eine längere Zyklisierungsdauer (Zyklenzahl n)
Figur 3 zeigt Entladekurven bei Verwendung eines herkömmlichen Separators
Figur 4 zeigt Entladekurven nach Figur 3 bei Verwendung eines erfindungsgemäßen Separators
Figur 5 zeigt Änderungen der Zellenhöhe bei Dauerüberladung.

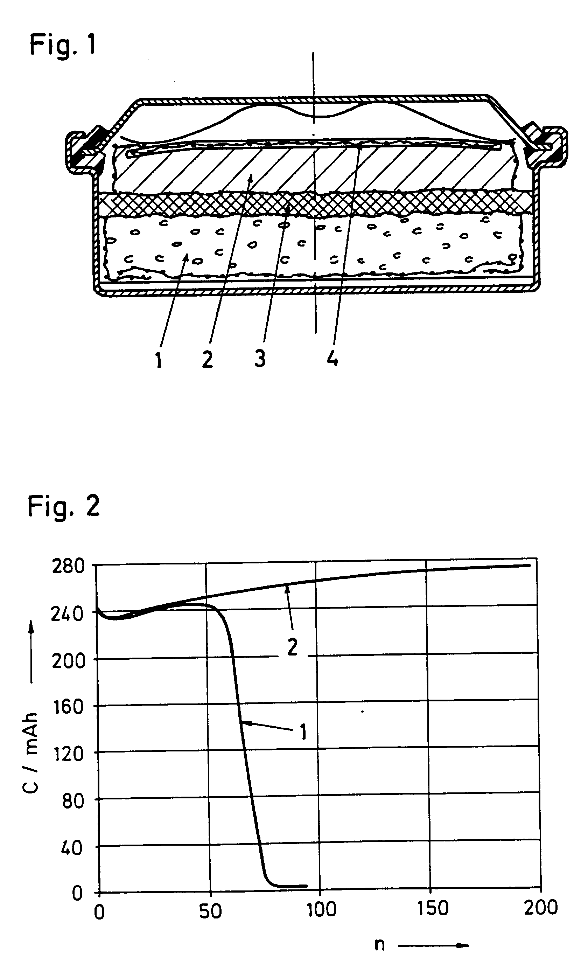

Aus Fig.1 ist der grundsätzliche Aufbau eines erfindungsgemäßen Akkumulators mit seinen wesentlichen Teilen, der jeweils in Tablettenform mit Drahtgewebeumhüllung vorliegenden positiven Elektrode 1, negativen Elektrode 2, dem mikroporösen Separator 3 und der Hilfselektrode 4 (Sauerstoffreduktionselektrode) ersichtlich. Die Hilfselektrode ist in diesem Fall durch Einwalzen einer Mischung aus Aktivkohle, Leitruß und PTFE in ein Nickelnetz gebildet und besonders vorteilhaft in die Nickelgewebehülle der negativen Elektrode integriert. Dadurch ist zugleich ein sehr zuverlässiger elektronenleitender Kontakt gewährleistet.

Außer in den Poren der Elektroden und des Separators befindet sich in der Zelle im wesentlichen kein frei beweglicher Elektrolyt.

### AusführunasbeisDiel:

Die Wirkungsweise der vorbeschriebenen Anordnung wird am Beispiel einer Nickel/Hydrid-Knopfzelle gezeigt.

Zusammensetzung der Zellkomponenten:
a) Positive Elektrode
   - Ni(OH)₂ :: 66 Gew.%
   - Niₘₑₜ :: 30 Gew.%
   - Coₘₑₜ :: 3 Gew.%
   - CoO :: 1 Gew.%

Die Masse wird zu einer Tablette gepreßt und anschließend mit einem Nickelnetz an der gesamten Außenfläche versehen, das die elektrische Ableitung sicherstellt.
b) Negative Elektrode
   - H-Speicherlegierung:: 94,5 Gew.%
   - Leitruß:: 2 Gew.%
   - Graphit:: 2 Gew.%
   - PTFE-Pulver:: 1,5 Gew.%

Eine abgewogene Menge dieser Masse wird wie bei der positiven Elektrode zu einer Tablette verpreßt und in ein Körbchen aus Ni-Netz gelegt. Auf die Elektrodenrückseite wird die O₂-verzehrende Hilfselektrode gelegt. Zur dauerhaften mechanischen Fixierung und elektrischen Kontaktierung wird der überstehende Rand des Körbchens umgebördelt.
c) Separator
   Als Separator wird bei dem Ausführungsbeispiel eine PP-Membran verwendet, die aus einem gereckten Kunststoff-Material hergestellt wird und die Porendurchmesser in der Größenordnung von 2µm bis 10µm aufweist.

An fertigen Zellen durchgeführte elektrische Messungen ergaben gemäß Fig.2 dank des mikroporösen Separators eine hervoragende Zyklenfestigkeit bei der Ni/HydridKnopfzelle. Während eine mit einem konventionellen Separator ausgestattete Zelle nach ca. 80 Zyklen in ihren Kapazitätswerten C[mAh] abrupt abfällt (Kurve 1), ist die mit dem genannten mikroporösen Separator ausgestattete Zelle bislang über 200 Zyklen stabil (Kurve 2).

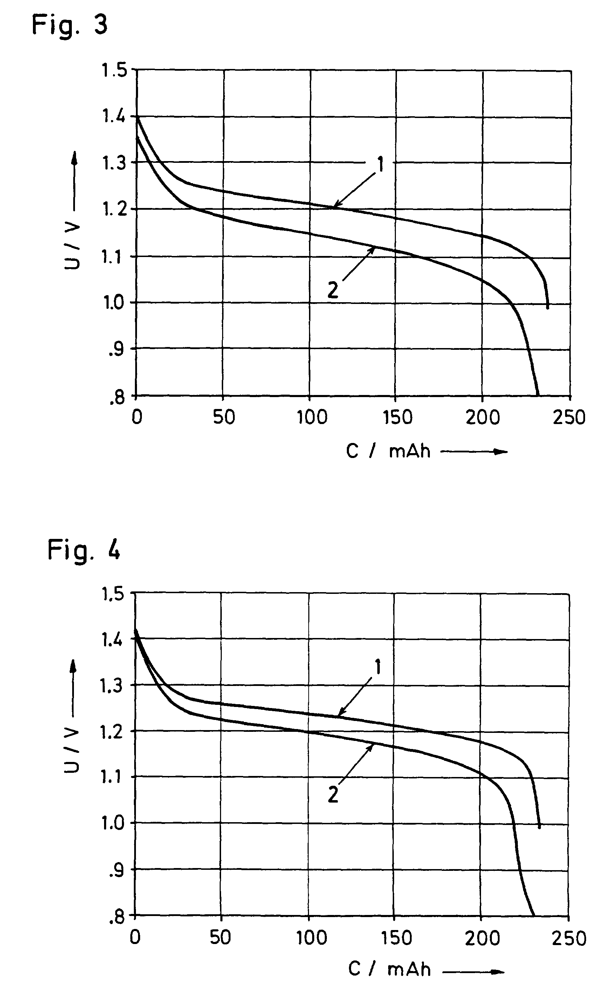

Auch auf die Belastbarkeit der Zelle wirkt sich der mikroporöse Separator günstig aus. Im Vergleich zu Zellen, die einen konventionellen Separator enthalten (Fig.3), zeigen erfindungsgemäße Zellen (Fig.4) bei den jeweiligen Entladeströmen 50mA (Kurven 1) und 120mA (Kurven 2) deutlich höhere Spannungslagen.

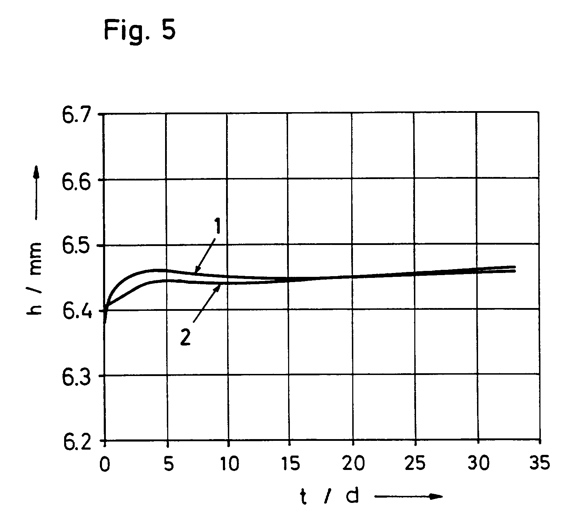

Schließlich ist aus Figur 5 die durch den Einsatz der O₂-Verzehrelektrode bedingte hervoragende Überladbarkeit ersichtlich. Trotz mehr als 30tägiger Überladung mit einem 2stündigen Strom (0.5CA) zeigt das Zellgefäß keine Verformungen, die sich zuerst in einer Vergrößerung der Zellhöhe (h) bemerkbar machen würden. Kurve 1 bezieht sich hierbei auf einen Überladestrom i = 0,5 CA, Kurve 2 auf eine Überladestrom i = 0,2 CA.

## Patentansprüche

1. Gasdicht verschlossener alkalischer Akkumulator in Knopfzellenform mit einer porösen positiven Elektrode, einer porösen negativen Elektrode, einer den Sauerstoffverzehr unterhaltenden, in elektrisch leitendem Kontakt zur negativen Elektrode stehenden Hilfselektrode und einem zwischen den Hauptelektroden angeordneten Separator, wobei der Akkumulator im wesentlichen keinen freien Elektrolyten enthält, dadurch gekennzeichnet, daß der Separator aus einem mikroporösen Material mit geringer Gasdurchlässigkeit im Betriebszustand der Zelle besteht, daß der mittlere Durchmesser der Separatorporen kleiner ist als der mittlere Durchmesser der Poren in der positiven und negativen Elektrode und daß die Hilfselektrode außerhalb des lonenleitpfades zwischen positiver und negativer Elektrode angeordnet ist.

2. Akkumulator nach Anspruch 1, dadurch gekennzeichnet, daß der mikroporöse Separator eine Kunststoffmembran mit Porendurchmessern zwischen 0,05µm bis 10µm, vorzugsweise 0,1µm bis 3µm, ist.

3. Akkumulator nach Anspruch 2, dadurch gekennzeichnet, daß die Kunststoffmembran durch Recken einer Kunststoffolie hergestellt ist.

4. Akkumulator nach Anspruch 2, dadurch gekennzeichnet, daß die Kunststoffmembran durch Ausformen einer mit einem Porenbildner durchmischten Kunststoffmasse und Auswaschen des Porenbildners erzeugt ist.

5. Akkumulator nach Anspruch 2, dadurch gekennzeichnet, daß die Kunststoffmembran eine strahlenvernetzte Polymerfolie ist.

6. Akkumulator nach einem der Ansprüche 2 bis 5, dadurch gekennzeichnet, daß die Dicke der Kunststoffmembran 0,05mm bis 0,3mm, vorzugsweise 0,1 mm bis 0,2mm beträgt.

7. Akkumulator nach einem der Ansprüche 2 bis 6, dadurch gekennzeichnet, daß das Membranenmaterial Polyethylen (PE) oder Polypropylen (PP) ist.

8. Akkumulator nach einem der Ansprüche 1 bis 7, dadurch gekennzeichnet, daß die Hilfselektrode an der von der positiven Elektrode abgekehrten Seite der negativen Elektrode angeordnet ist.

9. Akkumulator nach einem der Ansprüche 1 bis 8, dadurch gekennzeichnet, daß die Hilfselektrode aus einer in ein Nickeldrahtnetz eingewalzten Mischung aus Aktivkohle, Leitruß und PTFE besteht.

## Claims

1. Gastightly sealed alkaline storage battery in button-cell form having a porous positive electrode, a porous negative electrode, an auxiliary electrode which maintains the oxygen consumption and is in electrically conducting contact with the negative electrode, and a separator which is disposed between the main electrodes, the storage battery essentially containing no free electrolyte, characterised in that the separator is composed of a microporous material with low gas permeability in the operating state of the cell, in that the mean diameter of the separator pores is less than the mean diameter of the pores in the positive electrode and the negative electrode, and in that the auxiliary electrode is disposed outside the ion-conduction path between positive electrode and negative electrode.

2. Storage battery according to Claim 1, characterised in that the microporous separator is a plastics membrane having pore diameters between 0.05 µm and 10 µm, preferably 0.1 µm and 3 µm.

3. Storage battery according to Claim 2, characterised in that the plastics membrane is produced by stretching a plastics film.

4. Storage battery according to Claim 2, characterised in that the plastics membrane is produced by forming a plastics material mixed with a pore forming agent and washing out the pore forming agent.

5. Storage battery according to Claim 2, characterised in that the plastics membrane is a radiation-crosslinked polymer film.

6. Storage battery according to one of Claims 2 to 5, characterised in that the thickness of the plastics membrane is 0.05 mm to 0.3 mm, preferably 0.1 mm to 0.2 mm.

7. Storage battery according to one of Claims 2 to 6, characterised in that the membrane material is polyethylene (PE) or polypropylene (PP).

8. Storage battery according to one of Claims 1 to 7, characterised in that the auxiliary electrode is disposed at the side of the negative electrode remote from the positive electrode.

9. Storage battery according to one of Claims to 8, characterised in that the auxiliary electrode is composed of a mixture of active carbon, conducting soot and PTFE rolled into a nickel wire gauze.

## Revendications

1. Accumulateur alcalin étanche aux gaz du type bouton, avec une électrode positive poreuse, une électrode négative poreuse, une électrode auxiliaire maintenant la consommation d'oxygène et étant en contact électriquement conducteur par rapport à l'électrode négative, et avec un séparateur disposé entre les électrodes principales, tandis qu'essentiellement, il n'y a pas d'électrolyte libre, accumulateur caractérisé en ce que le séparateur est constitué d'un matériau micro poreux avec faible perméabilité aux gaz dans l'état de fonctionnement de l'élément d'accumulateur, en ce que le diamètre moyen des pores du séparateur est plus petit que le diamètre moyen des pores dans l'électrode positive et dans l'électrode négative, et en ce que l'électrode auxiliaire est disposée en dehors du chemin conducteur des ions entre l'électrode positive et l'électrode négative.

2. Accumulateur selon la revendication 1, caractérisé en ce que le séparateur microporeux est une membrane en matière plastique avec des diamètres de pores entre 0,05 µm et 10 µm, de préférence entre 0,1 µm et 3 µm.

3. Accumulateur selon la revendication 2, caractérisé, en ce que la membrane en matière plastique est obtenue par étirage d'une feuille de matière plastique.

4. Accumulateur selon la revendication 2, caractérisé en ce que la membrane en matière plastique est obtenue par transformation d'une masse de matière plastique mélangée avec un agent porogène et élimination de l'agent porogène.

5. Accumulateur selon la revendication 2, caractérisé en ce que la membrane en matière plastique est une feuille de polymère réticulée par rayonnement.

6. Accumulateur selon une des revendications 2 à 5, caractérisé en ce que l'épaisseur de la membrane en matière plastique est de 0,05 mm à 0,3 mm de préférence de 0,1 mm à 0,2 mm.

7. Accumulateur selon une des revendications 2 à 6 caractérisé en ce que le matériau de la membrane est du polyéthylène (PE) ou du polypropylène (PP).

8. Accumulateur selon une des revendications 1 à 7, caractérisé en ce que l'électrode auxiliaire est disposée sur le côté de l'électrode négative opposé à l'électrode positive.

9. Accumulateur selon une des revendications 1 à 8, caractérisé en ce que l'électrode auxiliaire consiste en un mélange de charbon actif, de suie conductrice et de polytétrafluoréthylène laminé sur un réseau en fils de nickel.
